Europäisches Patentamt

European Patent Office

Office européen des brevets

(19)

(11) Veröffentlichungsnummer: **0 092 724**
**A1**

(12) ## EUROPÄISCHE PATENTANMELDUNG

(21) Anmeldenummer: 83103476.4

(22) Anmeldetag: 11.04.83

(51) Int. Cl.³: **C 08 L 75/04**
C 08 G 18/14, C 08 K 7/02
C 08 J 5/06

(30) Priorität: 23.04.82 DE 3215260

(43) Veröffentlichungstag der Anmeldung:
02.11.83 Patentblatt 83/44

(84) Benannte Vertragsstaaten:
DE FR GB IT

(71) Anmelder: BAYER AG
Zentralbereich Patente, Marken und Lizenzen
D-5090 Leverkusen 1, Bayerwerk(DE)

(72) Erfinder: Hille, Lothar, Ing. grad.
Paul-Klee-Strasse 53
D-5090 Leverkusen 1(DE)

(72) Erfinder: Lüdke, Heimo, Dr.
Waldstrasse 20
D-5060 Bergisch Gladbach 2(DE)

(72) Erfinder: Hansjosten, Nikolaus
Franzenheimer Weg
D-5501 Pluwig(DE)

(54) **Verfahren zur Herstellung von faserhaltigen Polyurethanformteilen mit farblich inhomogenen, fasrig verteilte Farbkontraste aufweisenden Oberflächen und entsprechende Formteile.**

(57) Die Erfindung betrifft ein neuartiges Verfahren zu Herstellung von, gegebenenfalls zellulären, Polyurethanformteilen mit farblich inhomogenen, fasrig verteilte Farbkontraste aufweisenden, modisch ansprechenden Oberflächen, bei welchem man bei der an sich bekannten Herstellung derartiger Formteile mindestens einer der Ausgangskomponenten oder einem Teil hiervon farbige Fasern oder Fasergemische in einer Schnittlänge von 0,1 bis 6 mm und einem Titer von 0,1 bis 25 dtex einverleibt, sowie die entsprechenden Formteile mit einer farblich inhomogenen, fasrig verteilte Farbkontraste aufweisenden Oberfläche.

EP 0 092 724 A1

0092724

BAYER AKTIENGESELLSCHAFT     5090 Leverkusen, Bayerwerk

Zentralbereich
Patente, Marken und Lizenzen   Wr/m-c

Verfahren zur Herstellung von faserhaltigen Polyurethan-
formteilen mit farblich inhomogenen, fasrig verteilte
Farbkontraste aufweisenden Oberflächen und entsprechende
Formteile.

Die Erfindung betrifft ein Verfahren zur Herstellung
von faserhaltigen, gegebenenfalls zellulären Polyurethan-Formteilen mit farblich inhomogene, fasrig verteilte Farbkontraste aufweisenden Oberflächen durch
Einarbeitung von Fasern als Effektkomponente in die
Polyurethan-Reaktionskomponenten, sowie die entsprechenden Formteile.

Es ist bekannt, daß man Formteile aus expandierten oder
massiven Polyurethanen mit einer Oberflächenfärbung
durch Hinzufügung von Pigmenten, Farbstoffen oder beiden zu den Reaktionskomponenten versieht. Es ist weiterhin bekannt, daß farbige Oberflächen durch nachträgliche Behandlung der Formteile, z.B. Tauchen in Farbbäder, durch Spritzen, durch Gießen oder durch das sog.
"in-mould-coating"-Verfahren hergestellt werden können.

Ein Nachteil dieser Verfahren besteht darin, daß durch
den Zusatz von herkömmlichen färbenden Bestandteilen

Le A 21 645-Ausland

zu den flüssigen Komponenten eine homogen gefärbte Oberfläche entsteht, die den typischen Eindruck einer Kunststoff-Oberfläche hinterläßt. Eine solche Oberfläche ist jedoch für bestimmte Artikel, z.B. modische Schuhsohlen, nicht immer erwünscht. Durch farbliche Nachbehandlung z.B. Lackauftrag durch Spritzen, lassen sich ebenfalls farblich inhomogene Oberflächen erzielen. Die Nachbehandlung erfordert jedoch einen höheren Kostenaufwand und läßt sich z.B. bei direkt angeschäumten Schuhsohlen nur unter Anwendung besonderer Maßnahmen (Abdecken des Schuhoberteiles durch Schablonen) verwirklichen. Außerdem ergibt z.B. ein Auftrag von Lacken ein typisches Oberflächenbild, welches hinlänglich bekannt ist und aus modischen Aspekten heraus mehr und mehr abgelehnt wird.

Es sind auch prinzipiell schon fasergefüllte Polyurethan-Elastomere bekannt geworden, insbesondere solche, welche auf Basis von geschnittenen und gemahlenen Glasfaserzusätzen - vgl. DE-OS 2 056 740, wobei die Fasern Verstärkungswirkungen aufweisen sollen. Die Verwendung auch organischer Verstärkungsfasern wird in der DE-OS 2 220 306 und DE-OS 2 164 381 beschrieben.

Aus der DE-OS 2 419 527 ist ein Verfahren zur Herstellung dekorativer Kunststoff-Formkörper aus gefärbte Komponenten enthaltenden Formmassen bekannt geworden. Man mischt hierzu in die Formmassen (z.B. ungesättigte, glas-/und asbestfaser-haltige Polyester, gelöst in Styrol-/Diallylphthalat-Monomeren) solche Polymerisat-

Le A 21 645

**0092724**

Teilchen (z.B. gekörntes Polystyrol) ein, welche zumindest teilweise unter den bei der Verformung vorliegenden Bedingungen in dem Bindemittel der Formmasse löslich sind. Dabei haben die Polymerisat-Teilchen eine andere Farbe als die Formmasse und werden unter solchen Bedingungen, z.B. über Schmelze oder Extrusion, verarbeitet, daß die Polymerisat-Teilchen einen bestimmten, für den dekorativen Zweck notwendigen Grad der Auflösung zeigen. Die eingemischten Teilchen können entsprechend dem gewünschten dekorativen Zweck korn-, schuppen- oder fadenförmig sein. Es entstehen natursteinartige, dekorative Effekte mit verwischten Farbübergängen.

Es wurde nun gefunden, daß man modisch ansprechende Formteile aus Polyurethanen mit farblich inhomogene, fasrig verteilte Farbkontraste aufweisenden Oberflächen durch den Zusatz von farbigem, sog. Faserflock (kurze, geschnittene oder anderweitig zerkleinerte Fasern) als farbgebende oder zusätzlich farbgebende Bestandteile zu den Reaktionskomponenten des Polyurethans erhält, ohne daß die Verarbeitung der flüssigen Reaktionskomponenten beeinträchtigt wird. Der erwünschte farbige Oberflächeneffekt entsteht dabei direkt aus den flüssigen Reaktionskomponenten während der Reaktion, ohne daß irgendeine Nachbearbeitung der Formteile zur Farbgebung notwendig wird. Die Verarbeitung der Polyurethan-Reaktionskomponenten kann dabei auf den herkömmlichen, in der einschlägigen Industrie vorhandenen Verarbeitungsmaschinen erfolgen, ohne daß die mechanischen Eigenschaften der farbige Kontraste aufweisenden Formteile wesentlich beeinträchtigt werden.

Le A 21 645

Das Verfahren läßt sich besonders bei geeigneter Behandlung des Faserflocks z.B. mit Doroflocs, (BAYER AG, Leverkusen) in problemloser Einarbeitung und gleichmäßiger Verteilung des Faserflocks in den Polyurethan-Ausgangsmaterialien durch herkömmliche, in der einschlägigen Industrie vorhandenen Mischeinrichtungen (Propeller-Rührer, Zahnscheiben-Rührer, Turbo-Rührer) durchführen. Weiterhin wurde gefunden, daß die farbigen Faserflocken im Trägermedium nicht zum Absetzen oder Aufschwimmen neigen und dadurch bei der Verarbeitung keine besonderen Maßnahmen erforderlich sind, um diese Störungen zu verhindern.

Gegenstand der Erfindung ist somit ein Verfahren zur Herstellung von faserhaltigen, gegebenenfalls zellulären Polyurethan-Formteilen, vorzugsweise Polyurethan-Elastomer-Formteilen, mit farblich inhomogenen, fasrig verteilte Farbkontraste aufweisenden, modisch ansprechenden Oberflächen durch an sich bekannte Umsetzung von zu, gegebenenfalls zellulären, Polyurethan-Formteilen ausreagierenden Reaktionsgemischen in vorzugsweise geschlossenen Formen, dadurch gekennzeichnet, daß man farbige Fasern oder Fasergemische in einer Schnittlänge von 0,1 bis 6 mm, vorzugsweise 0,4 bis 3 mm, und einem Titer von 0,1 bis 25 dtex, vorzugsweise 1 bis 20 dtex, besonders bevorzugt 1,3 bis 17 dtex, welche kein Ausbluten ihres Gehaltes an färbenden Stoffen zeigen und sich nicht in den Ausgangskomponenten der Polyurethane lösen, in Mengen von 0,1 bis 10 Gew.-%, bevorzugt 0,15 bis 3 Gew.-%, besonders bevorzugt 0,2 bis 2 Gew.-%, bezogen auf das faserhaltige Reaktionsgemisch, einem oder mehreren der Ausgangskomponenten oder einem Teil davon zumischt.

Le A 21 645

Gegenstand der Erfindung sind ferner Formteile, speziell Schuhsohlen und -schäfte auf der Basis von homogenen oder zellulären Polyurethanen mit einer Dichte von ≥350 kg/m³ bis zur Dichte des gegebenenfalls mit weiteren Füllstoffen und anderen Zusatzstoffen nicht expandierten Polyurethan-Elastomeren, vorzugsweise mit einer Dichte ≥ 450 kg/m³,

mit einer farblich inhomogenen, fasrig verteilte Farbkontraste aufweisenden Oberfläche,

enthaltend farbige Fasern oder Fasergemische in einer Schnittlänge von 0,1 bis 6 mm, vorzugsweise 0,4 bis 3 mm, und einem Titer von 0,1 bis 25 dtex, vorzugsweise 1,0 bis 20 dtex, besonders bevorzugt 1,3 bis 17 dtex, welche kein Ausbluten ihres Gehaltes an färbenden Stoffen zeigen und sich nicht in den Ausgangskomponenten der Polyurethane lösen, in Mengen von 0,1 bis 10 Gew.-%, bevorzugt 0,15 bis 3 Gew.-%, besonders bevorzugt 0,2 bis 2 Gew.-%, bezogen auf das Polyurethan.

Die Erfindung kann nach unterschiedlichen Arten der Durchführung realisiert werden. So setzt man die farbigen Fasern vorzugsweise der Polyhydroxylverbindungen enthaltenden Komponente zu. Dies kann auch durch Zusatz der Fasern nur zu einem Teil der Polyhydroxylverbindungen geschehen. Die Fasern können jedoch auch der Polyisocyanat enthaltenden Komponente oder einer eventuell weiteren Komponente wie Kettenverlängerungsmitteln oder sonstigen Zusatzkomponenten beigegeben werden. Wenn

Le A 21 645

statt einer einstufigen, zum Polyurethan führenden Reaktion nach dem Zweistufen-Verfahren über NCO-Prepolymere gearbeitet wird, kann der Zusatz der Fasern auch zum NCO-Prepolymer erfolgen.

Eine weitere Möglichkeit besteht darin, die Fasern erst während der Vermischung der Reaktionskomponenten als zusätzliche Komponente in das Mischgefäß bzw. in die Mischkammer einzubringen, wobei man ein oder mehrere Faser-Konzentrate in z.B. relativ geringen Mengen der Polyhydroxylverbindungen benutzen kann. Hierdurch lassen sich auch unterschiedliche oder unterschiedlich farbige Flockfasern in die Polyurethan-bildenden Massen einbringen und es lassen sich besondere farbliche Effekte im Endprodukt erzielen.

Bei den erfindungsgemäß zu verwendenden farbigen Fasern handelt es sich vorzugsweise um natürliche oder synthetische farbige Fasern, die mit dem Polyurethan-Trägermaterial, welches selbst ungefärbt ist aber auch gefärbt sein kann, einen farblichen Kontrast bilden.

Die Art der sich damit ergebenden, farblich inhomogenen Oberflächen mit einer "belebten" Maserungsart farbigen Oberfläche des Polyurethan-Formteils hängt ebenfalls von der Art, der Form, der Dicke und der Länge der verwendeten Fasern ab.

Die Abmessungen der farbigen Fasern werden nach oben hin in erster Linie von der für die Herstellung der Formtei-

Le A 21 645

le benutzten Maschinen bzw. Misch- und/oder Förderorgane begrenzt. Dagegen hat sich gezeigt, daß bei zu geringen Abmessungen·der Fasern eine weniger kontrastreiche, bzw. eine farblich homogene Oberfläche entsteht. Zur Erzielung des gewünschten Oberflächenbildes muß man erfindungsgemäß farbige Fasern mit einer Schnittlänge von 0,1 bis 6 mm, vorzugsweise jedoch 0,4 bis 3 mm einsetzen. Bei gemahlenen oder fibrillierten Fasern verwendet man Gemische mit einer maximalen Faserlänge von 6 mm.

Der Titer der verwendeten Fasern erstreckt sich erfindungsgemäß auf 0,1 bis 25 dtex, vorzugsweise jedoch von 1,0 bis 20 dtex, besonders bevorzugt 1,3 bis 17 dtex. Weiterhin ist das Oberflächenbild von der Menge des zugesetzten Faseranteils abhängig. Erfindungsgemäß kommen Zusätze von 0,1 bis 10 Gew.-%, vorzugsweise jedoch 0,15 bis 3 Gew.-% und besonders von 0,2 bis 2 Gew.-%, bezogen auf das gesamte zum Polyurethan führende Reaktionsgemisch, einschließlich aller Zusätze in Frage. Es können die farbigen Fasern auch in Form von Mischungen von Fasern verschiedenen chemischen Aufbaus, verschieden geformter Faserquerschnitte und verschiedener Titer, verschiedener Länge und gegebenenfalls variierender Dicke innerhalb der Faserlänge verwendet werden. Ferner können Mischungen von verschiedenfarbigen Fasern eingesetzt werden bzw. Farbeffekte durch variierende Farbmischungen erzielt werden. Besonders geeignet haben sich solche farbigen Fasern, wie sie als Flockfasern zum Beflocken von Oberflächen bekannt sind, erwiesen.

Le A 21 645

Als natürliches Fasermaterial können erfindungsgemäß alle fasrigen Naturprodukte in farbiger (gefärbter) Form eingesetzt werden. Es handelt sich dabei z.B. um Fasern aus Baumwolle, Wolle, Flachs, Hanf, Jute, Bast, Palmfaser, Sisal und anderen, welche z.B. mit Farbstoffen kontrastreich zum Polyurethan gefärbt sind.

Als synthetische Fasern eignen sich alle Fasern aus Chemiewerkstoffen, die die erfindungsgemäßen Bedingungen erfüllen. So werden Fasern z.B. aus modifizierten Naturstoffen wie Viskose oder aus Chemiewerkstoffen wie synthetischen Fasern aus Polyamid, Polyacrylnitril, Polyester, Aramid, Elasthan, Modacryl, Polyvinylchlorid, Polyvinylidenchlorid, Polyolefinen und/oder verschiedenen Copolymerisaten, die sich in Faserform überführen lassen, eingesetzt. Vorzugsweise wird jedoch handelsübliches Flockfasermaterial z.B. aus Polyamid, Viskose, Polyacrylnitril oder Polyester eingesetzt.

Um den gewünschten Farbkontrast der Formteil-Oberflächen zu erhalten, müssen Pigmente oder Farbstoffe verwendet werden, die nach dem Einmischen der farbigen Flockfasern in das Trägermedium, vorzugsweise in die Polyhydroxylverbindungen, nicht migrieren (Ausbluten). Dafür haben sich z.B. in Verbindung mit Polyacrylnitril-Fasern ausgesuchte basische Farbstoffe z.B. Astrazon®-Farbstoffe bewährt, für Polyamidsäurefarbstoffe oder für Cellulose- bzw. Viskose-Fasern Reaktivfarbstoffe. Farbige Fasern mit anorganischen Pigmenten oder schwerlöslichen organischen Pigmenten als farbgebenden Mittel sind im allge-

Le A 21 645

0092724

- 9 -

meinen ausblutfest. Die Fasern müssen über ihre Eigenfarbe hinaus farbig sein und in der Farbtiefe hinreichend gegenüber der Polyurethanmasse, die selbst auch gefärbt sein kann, differenzieren. Zur Färbung werden daher im allgemeinen, bezogen auf das Gewicht der Faser, mehr als 0,4 Gew.-% Farbstoff oder Farbpigment, bevorzugt mehr als 0,75 Gew.-%, zumeist mehr als 1 Gew.-% Farbstoff oder Farbpigment, verwendet. Für besondere Effekte können auch Fasern mit Fluoreszenz-Farbstoffen, Tagesleuchtfarben, farbig opaleszierenden Zusätzen (perlmuttartigen Zusätzen) und sonstigen farbgebenden Zusätzen verwendet werden.

Die Fasern selbst können dabei nach Trocken- und Naßspinnverfahren, nach Koagulationsverfahren, durch Fibrillieren oder elektrostatisches Sprühen oder auch durch mechanische Zerkleinerung wie Schneiden, Reißen, Mahlen, Fibrillieren hergestellt werden. Es können auch Mehrkomponentenfasern, Bifilarfasern mit Kräuselungstendenz, texturierte Fäden oder bändchenförmige Fäden eingesetzt werden. Die Fasern werden an ihrer Oberfläche zumeist mit solchen üblichen Präparationen oder sonstigen Oberflächen modifizierenden Mitteln behandelt, daß sie sich leicht in den Ausgangsmaterialien der Polyurethan-Herstellung verteilen lassen. Besonders geeignete Fasern dieser Art sind die für Beflockungszwecke angebotenen handelsüblichen "Flockfasern".

Anstelle von natürlichen oder synthetischen Fasern können auch Glasfasern (Silidatfasern), welche aus farbigen Glasschmelzen ersponnen wurden, eingesetzt wer-

Le A 21 645

den. Ein solches Vorgehen ist jedoch in der Praxis wenig bevorzugt, da sich geeignete farbige Glasfasern nur in begrenzten Farbtönen und technologisch-wirtschaftlich wenige praktikabler Arbeitsweise herstellen lassen, ungeeignet.

Die farbigen Fasern müssen erfindungsgemäß eine ausreichende Migrationsbeständigkeit des verwendeten Farbstoffs aufweisen. Eine Prüfung des Migrationsverhaltens kann durch Lagern des Gemisches von farbigen Fasern und der als Träger dienenden Reaktionskomponente bei der entsprechenden Verarbeitungstemperatur dieser Komponente erfolgen (z.B. Polyesterpolyol/Faser-Abmischung bei 50°C). Die Zeitdauer dieser Prüfung muß sich über die praktische Lagerzeit des Gemisches von Reaktionskomponente und Faserflock erstrecken (zumindest zwei Stunden), vorzugsweise 24 Stunden.

Als farbige Fasern sollen nur solche verwendet werden, welche sich in den Reaktionskomponenten bzw. während der Polyurethan-bildenden Reaktion nicht auflösen oder zum Teil lösen. Beispiele für erfindungsgemäß herzustellende Formteile sind Schuhsohlen, Schuhabsätze, Schuhschäfte, in einem Arbeitsgang angeschäumte Laufsohlen, Sohlen in mehrschichtigem Aufbau, elastische gummiartige Puffer, Griffmulden, Sicherheitsblenden, Polsterteile, z.B. im Automobilbau, Matten, Surfbretterauflagen, Schutzkappen, Kissen, Abdeckungen, Gehäuse, Möbelteile, Verkleidungen oder Stuhl-Formteile.

Bei den besonders bevorzugt erfindungsgemäß herzustellenden Formteilen handelt es sich um weiche, halbharte oder harte, vorzugsweise halbharte und vorzugsweise zelluläre Polyurethan-Formkörper mit einer geschlossenen Außenhaut, wie sie in an sich bekannter Weise durch Umsetzung von, zu Polyurethan-Formkunststoffen ausreagierenden Reaktionsgemischen in geschlossenen Formen unter "over-charging" erhältlich sind. Bei dieser bekannten Methode wird die Menge des in die Form eingebrachten Reaktionsgemisches so bemessen, daß die durchschnittliche Dichte des resultierenden Formkörpers über der Dichte eines entsprechenden, frei geschäumten, d.h. beispielsweise in einer offenen Form erhaltenen, Schaumstoffes liegt. Durch geeignete Wahl der Art und Menge der eingesetzten Ausgangsmaterialien, sowie Hilfs- und Zusatzmittel, sowie durch an sich bekannte Steuerung der Formtemperatur lassen sich so die unterschiedlichsten Formschaumstoffe mit mehr oder weniger stark ausgebildeter Außenhaut und gegebenenfalls mit integraler Dichteverteilung oder aber auch - bei Verzicht auf die Mitverwendung von Treibmitteln - massive Formkunststoffe erhalten. Desgleichen kann die Härte der erfindungsgemäß herzustellenden Formkörper durch geeignete Wahl der Art und Menge der eingesetzten Ausgangsmaterialien in an sich bekannter Weise eingestellt werden. Die chemische Natur der Ausgangsmaterialien, sowie die Zusammensetzung der Rezepturen ist nicht erfindungswesentlich und kann der einschlägigen Literatur entnommen werden (vgl. diesbezüglich z.B. "Integralschaumstoffe" von Piechota/Röhr, Carl Hanser Verlag, München/Wien, Seiten 14-23 oder Kunststoff-Handbuch, Bd. VII, "Polyurethane" von Vieweg/Höchtlen, Carl Hanser Verlag, München).

Le A 21 645

Vorzugsweise erfolgt auch beim erfindungsgemäßen Verfahren die Verarbeitung der an sich bekannten Reaktionsgemische einstufig mit Hilfe der bekannten Zweikomponenten-Mischaggregate. Auch diesbezüglich kann auf die einschlägige Literatur verwiesen werden (vgl. z.B. "Integralschaumstoffe" von Piechota/Röhr, Seiten 26-56 oder "Wirtschaftliches Herstellen von PUR-Formteilen" VDI-Verlag Düsseldorf (1981), Seiten 123-136).

Das erfindungsgemäße Verfahren kann jedoch auch nach dem Prepolymerprinzip erfolgen, d.h. beispielsweise dergestalt, daß man die Formkörper aus vorab hergestellten NCO-Prepolymeren und geeigneten Kettenverlängerungsmitteln, gegebenenfalls unter Mitverwendung der üblichen Hilfs- und Zusatzmittel herstellt.

Bei den erfindungsgemäßen Formkörpern handelt es sich vorzugsweise um halbharte Polyurethan-Elastomere mit einer geschlossenen Außenhaut und vorzugsweise zellförmigem Kern hergestellt, d.h. es werden bei der Durchführung des erfindungsgemäßen Verfahrens vorzugsweise die bekannten, zu derartigen Elastomeren ausreagierenden Ausgangsmaterialien eingesetzt.

Erfindungswesentlich ist einzig und allein die bereits erwähnte Mitverwendung der farbigen Fasern in den oben genannten Mengen.

Die Dichte der erfindungsgemäßen Elastomeren beträgt mindestens 350 kg/m$^3$, vorzugsweise mindestens 450 kg/m$^3$ und kann im Falle von schwach oder nicht geschäumten, evtl. mineralische Füllstoffe enthaltenden Formkörpern

Le A 21 645

bis zu 1.400, vorzugsweise bis zu 1.200 kg/m³, betragen. Wie bereits ausgeführt, dient das erfindungsgemäße Verfahren insbesondere der Herstellung von Schuhsohlen und -schäften.

Die nachstehenden Beispiele dienen der weiteren Erläuterung des erfindungsgemäßen Verfahrens.

Beispiele

In den nachfolgenden Beispielen 1 und 2 wird die Herstellung von Polyurethan-Schuhsohlen beschrieben. Hierzu wurde eine auf 40°C temperierte Aluminiumform verwendet. Die Menge des schaumfähigen Gemisches wurde so bemessen, daß Formkörper einer Rohdichte von 500 kg/m³ resultierten. Die Verarbeitung der Reaktionskomponenten erfolgt auf einer Niederdruckmaschine der Firma DESMA, die speziell für die Herstellung von Polyurethan-Schuhsohlen geeignet ist (Injection Unit PSA 70 der Firma DESMA-Werke GmbH, D-2807 Achim). Die Förderung und Dosierung der Reaktionskomponenten geschah über Zahnradpumpen. Das Vermischen der Reaktionskomponenten erfolgt durch eine hochtourige Mischschnecke.

Beispiel 1

A)    Polyol-Komponente:

| | |
|---|---|
| Polyesterdiol der OH-Zahl 56 auf Basis von Adipinsäure, Ethylenglykol und Diethylenglykol (Gewichtsverhältnis 50:50) | 90,0 Gew.-teile |
| Butandiol-1,4 | 12,0 Gew.-teile |
| Triethylendiamin | 0,6 Gew.-teile |
| Wasser | 0,4 Gew.-teile |
| handelsüblicher Polysiloxan-Stabilisator (Dow Corning Oil 193 der Fa. Dow Corning International Ltd.) | 1,0 Gew.-teile |
| Pigmentpaste (beige) | 0,7 Gew.-teile |
| Faserflock (Polyacrylnitril-Faser mit einem Titer von dtex 1,3 und | |

Le A 21 645

einer Schnittlänge von 0,9 mm,
dunkelbraun eingefärbt unter Verwendung eines nicht migrierenden
Astrazon®-Farbstoff)                          1,0 Gew.-teile

B) Polyisocyanat-Komponente:

Die Polyisocyanat-Komponente bestand aus einem
Semi-Prepolymeren mit einem NCO-Gehalt von 20 Gew.-%,
hergestellt durch Umsetzung von 4,4'-Diisocyanato-
diphenylmethan mit dem oben genannten Polyesterdiol.

Die Komponenten A) und B) werden unter Einhaltung einer
NCO-Kennzahl von 100 verarbeitet.

Nach einer Formstandzeit von 4 Min. wird eine flexible
Schuhsohle erhalten, die eine farblich inhomogene Oberfläche aufweist, wobei der farbliche Oberflächeneffekt
mit einer feinen Marmorierung verglichen werden kann.
Die einzelnen Fasern sind mit dem bloßen Auge hierbei
nicht zu erkennen.

Beispiel 2

A) Polyol-Komponente:

Polyetherdiol der OH-Zahl 28, hergestellt durch Propoxylierung von Propylenglykol mit anschließender Anlagerung von Ethylenoxid                         90,0 Gew.-teile

Le A 21 645

Butandiol-1,4                                     10,0 Gew.-teile

Triethylendiamin                                   0,40 Gew.-teile

Dibutylzinndilaurat                                0,02 Gew.-teile

Monofluortrichlormethan                            6,00 Gew.-teile

Pigmentpaste (weiß)                                1,50 Gew.-teile

Faserflock (Polyacrylnitril-Faser

mit einem Titer von dtex 17 und

einer Schnittlänge von 1 mm, blau

eingefärbt mit einem nicht migrierenden Astrazon®-Farbstoff)                           0,70 Gew.-teile

B)    Polyisocyanat-Komponente:

Die Polyisocyanat-Komponente besteht aus einem Umsetzungsprodukt von 4,4'-Diisocyanato-diphenylmethan
mit einem äquimolaren Gemisch aus Di- und Tripropylenglykol. Das Umsetzungsprodukt weist einen NCO-
Gehalt von 24 Gew.-% auf.

Die Komponenten A) und B) wurden unter Einhaltung einer
NCO-Kennzahl von 100 verarbeitet.

Nach einer Formstandzeit von 4 Min. wurde eine Schuhsohle mit einer farblich inhomogenen Oberfläche erhalten.

Beispiel 3

A)    Polyol-Komponente:

Polyesterdiol gemäß Bespiel 1                      90,0 Gew.-teile

Hexandiol-1,6                                       6,0 Gew.-teile

Le A 21 645

.Triethylendiamin                                        0,5 Gew.-teile

Faserflock (Polyamidfaser mit einem

Titer von dtex 1,6 und einer Schnittlänge von 0,8 mm, schwarz eingefärbt

mit einem nicht migrierenden Säurefarbstoff (Telon$^R$-Farbstoff der Bayer AG  0,70 Gew.-teile.

Leverkusen))

B)    Polyisocyanat-Komponente:


Die Polyisocyanat-Komponente entsprach der Polyisocyanat-Komponente des Beispiels 1.


Die Komponenten A) und B) wurden äquimolekular miteinander vermischt und in eine auf 40°C temperierte Aluminiumform der Abmessung 200x200x10 mm gegeben. Nach einer Formstandzeit von 3 Min. resultierte ein flexibler, massiver, d.h. nicht-geschäumter Formkörper mit einer farblich inhomogenen Oberfläche.


Beispiel 4


A)    Polyol-Komponente:


Propoxyliertes Trimethylolpropan der

OH-Zahl 550                                          70,0 Gew.-teile

Phthalsäure/Trimethylolpropan-

polyesterpolyol der OH-Zahl 350        20,0 Gew.-teile

handelsüblicher Polysiloxan-Stabilisator (Stabilisator OS 710 der          3,0 Gew.-teile

Bayer AG, Leverkusen)


Le A 21 645

permethyliertes Diethylentriamin      0,2 Gew.-teile

Monofluortrichlormethan      6,0 Gew.-teile

Faserflock (Polyacrylnitril-Faser

mit einem Titer von dtex 3,3 und

einer Schnittlänge von 1 mm, rot

eingefärbt unter Verwendung eines

Astrazon®-Farbstoffs)      1,5 Gew.-teile.

B)     Polyisocyanat-Komponente:

Carbodiimid-modifiziertes 4,4'-Diisocyanato-diphenylmethan mit einem NCO-Gehalt von 30 %.

Unter Verwendung der in Beispiel 3 beschriebenen Form wird ein Gemisch aus A) und B) unter Einhaltung einer NCO-Kennzahl von 100 zu einem Formschaumstoff verarbeitet, wobei die Menge des schäumfähigen Gemisches so bemessen wurde, daß eine Rohdichte des Formkörpers von 500 kg/m$^3$ resultierte. Nach einer Formstandzeit von 5 Min. resultierte ein starrer Polyurethanschaumstoff-Formkörper mit einer farblich inhomogenen Oberflächenbeschaffenheit.

Patentansprüche:

1. Verfahren zur Herstellung von faserhaltigen, gegebenenfalls zellulären Polyurethan-Formteilen mit farblich inhomogenen, fasrig verteilte Farbkontraste aufweisenden, modisch ansprechenden Oberflächen durch an sich bekannte Umsetzung von zu, gegebenenfalls zellulären, Polyurethan-Formteilen ausreagierenden Reaktionsgemischen in geschlossenen Formen, dadurch gekennzeichnet, daß man farbige Fasern oder Fasergemische mit einer Schnittlänge von 0,1 bis 6 mm und einem Titer von 0,1 bis 25 dtex, welche kein Ausbluten ihres Gehalts an färbenden Stoffen zeigen und sich nicht in den Ausgangskomponenten der Polyurethane lösen, in Mengen von 0,1 bis 10 Gew.-%, bezogen auf das faserhaltige Reaktionsgemisch, einem oder mehreren der Ausgangskomponenten oder einem Teil davon zumischt.

2. Formteile auf der Basis von homogenen oder zellulären Polyurethanen mit einer Dichte von $\geq$ 350 kg/m³ mit einer farblich inhomogenen, fasrig verteilte Farbkontraste aufweisenden Oberfläche, enthaltend farbige Fasern oder Fasergemische in einer Schnittlänge von 0,1 bis 6 mm mit einem Titer von 0,1 bis 25 dtex, welche kein Ausbluten ihres Gehalts an färbenden Stoffen zeigen und sich nicht in den Ausgangskomponenten der Polyurethane lösen, in Mengen von 0,1 bis 10 Gew.-%, bezogen auf das Polyurethan.

Le A 21 645

## EUROPÄISCHER RECHERCHENBERICHT

| | EINSCHLÄGIGE DOKUMENTE | | EP 83103476.4 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE - A1 - 3 016 713 (LENINGRADSKIJ INSTITUT TEKSTILNOJ I LEGKOJ PROMYSCHLENNOSTI) <br><br> * Ansprüche; Seite 12, Zeilen 15-18; Seite 17, Zeile 35 - Seite 18, Zeile 9 * <br><br> -- | 1,2 | C 08 L 75/04 <br> C 08 G 18/14 <br> C 08 K 7/02 <br> C 08 J 5/06 |
| A | DE - A1 - 2 924 426 (W.R. GRACE & CO) <br><br> * Ansprüche; Seite 9, Zeilen 22-24 * <br><br> -- | 1,2 | |
| D,A | DE - B2 - 2 220 306 (BRIDGESTONE TIRE CO. LTD.) <br><br> * Anspruch * <br><br> -- | 1,2 | |
| D,A | DE - A - 2 419 527 (ALL DECOSTONE N.V.) <br><br> * Ansprüche * <br><br> ---- | 1,2 | RECHERCHIERTE SACHGEBIETE (Int. Cl. ³) <br><br> C 08 L 75/00 <br> C 08 G 18/00 <br> C 08 K <br> C 08 J |

Der vorliegende Recherchenbericht wurde für alle Patentansprüche erstellt.

| Recherchenort | Abschlußdatum der Recherche | Prüfer |
|---|---|---|
| WIEN | 29-06-1983 | WEIGERSTORFER |